(19) Europäisches Patentamt
European Patent Office
Office européen des brevets

(11) **EP 4 752 777 A1**

(12) **DEMANDE DE BREVET EUROPEEN**

(43) Date de publication:
**03.06.2026 Bulletin 2026/23**

(21) Numéro de dépôt: **25216807.5**

(22) Date de dépôt: **19.11.2025**

(51) Classification Internationale des Brevets (IPC):
**G06F 21/75** (2013.01) **G06F 21/77** (2013.01)
**H04L 9/00** (2022.01)

(52) Classification Coopérative des Brevets (CPC):
**G06F 21/755; G06F 21/77; H04L 9/003;**
G06F 2221/2123

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **02.12.2024 FR 2413312**

(71) Demandeur: **STMicroelectronics International
N.V.**
**1228 Plan-les-Ouates, Geneva (CH)**

(72) Inventeurs:
• **SARAFIANOS, Alexandre**
**83910 POURRIERES (FR)**
• **ORDAS, Thomas**
**83470 POURCIEUX (FR)**
• **MEYNARD, Olivier**
**13100 AIX EN PROVENCE (FR)**
• **BILDGEN, Marco**
**74420 HABERE-POCHE (FR)**

(74) Mandataire: **Cabinet Beaumont
4, Place Robert Schuman
B.P. 1529
38025 Grenoble Cedex 1 (FR)**

(54) **DISPOSITIF ELECTRONIQUE**

(57) La présente description concerne un dispositif électronique (14) comprenant un premier circuit de protection contre des attaques, le premier circuit comprenant une mémoire (18) configurée pour contenir un premier paramètre configurable (PPA) correspondant à la perte de performance acceptable, le premier circuit comprenant au moins deux modules distincts de perturbation (22) du courant de masse, le premier circuit étant configuré pour, lorsque la protection est activée :
- générer des phases de fonctionnement ;

- durant chaque phase, multiplier la fréquence d'un signal d'horloge (CLK) par un premier pourcentage (CLK_PERF) ; et
- durant chaque phase, mettre en œuvre au moins une partie des modules de perturbation,
le premier pourcentage (CLK_PERF) et les paramètres des modules de perturbation étant déterminés au début de la phase de telle manière que la perte de performance acceptable (PPA) n'est pas dépassée.

Fig 3

**Description**

Domaine technique

La présente description concerne de façon générale les dispositifs électroniques et plus précisément les dispositifs protégés contre des attaques.

Technique antérieure

Les dispositifs électroniques utilisent régulièrement des données cryptées, cachées ou de manière générale des données que le fabriquant ou l'utilisateur souhaite conserver secrètes de personnes extérieures. Il existe un grand nombre de méthodes pouvant être utilisées par de telles personnes extérieures, attaquant ou pirates. Ces méthodes peuvent être non invasives, par exemple des attaques par canal auxiliaire (side-channel attacks), invasives, ou semi-invasives, par exemple des attaques par injections de fautes.

Il existe un besoin de protéger des dispositifs électroniques contre ces méthodes.

Résumé de l'invention

Un mode de réalisation prévoit un dispositif électronique comprenant un premier circuit de protection contre des attaques, le premier circuit comprenant une mémoire configurée pour contenir un premier paramètre configurable correspondant à la perte de performance acceptable, le premier circuit comprenant au moins deux modules distincts de perturbation du courant de masse, le premier circuit étant configuré pour, lorsque la protection est activée : générer des phases de fonctionnement ; durant chaque phase, multiplier la fréquence d'un signal d'horloge par un premier pourcentage; et durant chaque phase, mettre en œuvre au moins une partie des modules de perturbation, le premier pourcentage et les paramètres des modules de perturbation étant déterminés au début de la phase de telle manière que la perte de performance acceptable n'est pas dépassée.

Un autre mode de réalisation prévoit un procédé de commande d'un dispositif électronique comprenant un premier circuit de protection contre des attaques, le premier circuit comprenant une mémoire dans laquelle est contenu un premier paramètre configurable correspondant à la perte de performance acceptable, le premier circuit comprenant au moins deux modules distincts de perturbation du courant de masse, le procédé comprenant, lorsque la protection est activée : la génération par le premier circuit des phases de fonctionnement ; durant chaque phase, la multiplication par le premier circuit de la fréquence d'un signal d'horloge par un premier pourcentage; et durant chaque phase, la mise en œuvre par le premier circuit d'au moins une partie des modules de perturbation, le premier pourcentage et les paramètres des modules de perturbation étant déterminés au début de la phase de telle manière que la perte de performance acceptable n'est pas dépassée.

Selon un mode de réalisation, la perte de performance acceptable correspond au temps maximal supplémentaire nécessaire pour effectuer une action lorsque la protection est activée par rapport au temps nécessaire pour effectuer la même action lorsque la protection est désactivée.

Selon un mode de réalisation, les attaques contre lesquelles le dispositif est protégé comprennent la mesure du courant de masse.

Selon un mode de réalisation, le dispositif comprend un générateur de nombre aléatoire.

Selon un mode de réalisation, un deuxième paramètre configurable est contenu dans la mémoire, le deuxième paramètre correspondant à la surconsommation acceptable de puissance, le dispositif comprenant un deuxième circuit de mesure de la consommation du dispositif et de comparaison avec le deuxième paramètre.

Selon un mode de réalisation, le premier circuit est configuré pour choisir aléatoirement le premier pourcentage au début de chaque phase entre une valeur égale à 100% moins le premier paramètre et un deuxième pourcentage.

Selon un mode de réalisation, le premier circuit est configuré pour diminuer le deuxième pourcentage si le deuxième circuit détecte que la consommation du dispositif est supérieure au deuxième paramètre.

Selon un mode de réalisation, le premier circuit est configuré pour désactiver la protection si la valeur de 100% moins le deuxième pourcentage devient supérieure au premier paramètre.

Selon un mode de réalisation, la durée des phases est aléatoire.

Selon un mode de réalisation, le premier circuit est configuré pour, à chaque phase, choisir aléatoirement les modules de perturbation mis en œuvre durant la phase.

Selon un mode de réalisation, les modules de perturbation sont divisés en des première et deuxième catégories, la première catégorie comprenant les perturbations dont la mise en oeuvre entraine une diminution de la performance du dispositif égale à son taux d'apparition et la deuxième catégorie dont la mise en oeuvre n'entraine pas ne diminution de la performance du dispositif.

Selon un mode de réalisation, le premier circuit est configuré pour déterminer aléatoirement, au début de chaque phase, pour chaque module de perturbation mis en œuvre durant la phase, un taux d'apparition.

Selon un mode de réalisation, le premier circuit est configuré pour déterminer, au début de chaque phase, aléatoirement et successivement pour chaque module de perturbation de la première catégorie mis en œuvre durant la phase, le taux d'apparition dudit module de perturbation entre 0% et la soustraction de la somme des taux d'apparition des modules de perturbation de la première catégorie déjà déterminé et de la différence entre le paramètre CLK_PERF et 100% à le premier paramètre.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 illustre un type d'attaque de dispositif électronique ;

la figure 2 illustre schématiquement le fonctionnement d'un mode de réalisation d'une contremesure contre une attaque ;

la figure 3 représente schématiquement un mode de réalisation d'un dispositif protégé contre des attaques ;

la figure 4 représente plus en détail une partie du mode de réalisation de la figure 3 ;

la figure 5 est un chronogramme illustrant le fonctionnement d'une partie du mode de réalisation de la figure 5 ;

la figure 6 représente le fonctionnement d'une partie du mode de réalisation de la figure 5 ;

la figure 7 est un chronogramme illustrant le fonctionnement d'une partie du mode de réalisation de la figure 5 ;

la figure 8 représente le fonctionnement d'une partie du mode de réalisation de la figure 5 ; et

la figure 9 est un chronogramme illustrant le fonctionnement d'une partie du mode de réalisation de la figure 5.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % ou à 10° près, de préférence à 5 % ou à 5° près.

Le dispositif peut par exemple être utilisé dans le domaine industriel. Plus particulièrement, le dispositif vise par exemple à être utilisé pour le développement des énergies vertes ou pour l'électrification d'infrastructures, par exemple pour des bornes de recharge ou pour l'incorporation d'énergie solaire. L'appareil peut également être utilisé dans le domaine de l'Internet des objets et de la maison intelligente. Le dispositif est par exemple destiné à être mis en œuvre dans les circuits de puissance et d'énergie d'équipements comprenant par exemple des thyristors 800V ou 1200V, des diodes ultrarapides 1200V et en carbure de silicium, des diodes de suppression de tensions transitoires et des protections contre les décharges électromagnétiques. L'appareil peut également être utilisé dans la mise en œuvre de cloud, de réseaux 5G, de centres de données et de serveurs. Le dispositif comprend par exemple des matériaux à large bande interdite.

Le dispositif est par exemple destiné à être utilisé dans l'électronique personnelle, par exemple dans le but d'augmenter le contenu radiofréquence, dans les appareils de connexions 5G ou plus généralement dans les appareils connectés. L'appareil est par exemple un smartphone ou une partie d'un réseau Internet des objets. L'appareil est par exemple connecté en 5G, en WIFI ou en bande ultra-blanche. Le dispositif comprend par exemple des interfaces haut débit, avec par exemple un filtrage avancé et une protection contre les décharges électromagnétiques.

Le dispositif est par exemple destiné à être utilisé dans des équipements de communication, ou dans des ordinateurs et périphériques. Par exemple, l'appareil peut être utilisé dans une infrastructure 5G et des centres de données dédiés. Le dispositif comprend par exemple des diodes en carbure de silicium, des transistors Schottky de puissance, des protections contre les décharges électromagnétiques et des diodes de suppression de tensions transitoires. Le dispositif peut également être utilisé dans des satellites, comprenant par exemple des dispositifs passifs intégrés pour des applications radiofréquence.

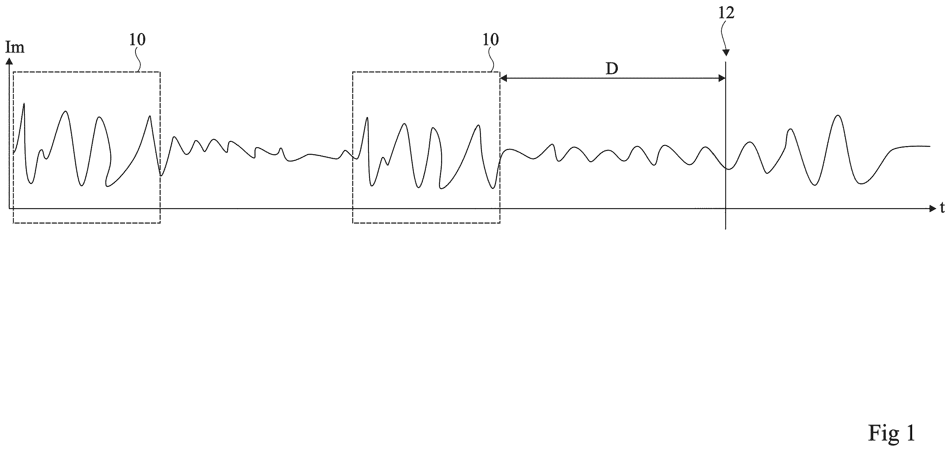

La figure 1 illustre un type d'attaque de dispositif électronique. Plus précisément, la figure 1 représente le courant de masse **Im** d'un dispositif électronique, par exemple d'une puce électronique, en fonction du temps t. Par courant de masse, on entend le courant mesuré au niveau de la masse du dispositif. Alternativement, la figure 1 peut représenter les émissions électromagnétiques du dispositif électronique en fonction du temps t. Par la suite, l'impact des modes de réalisation est décrit en relation avec le courant de masse. Cet impact est équivalent sur les émissions électromagnétiques du dispositif.

Lors du fonctionnement du dispositif électronique, les variations du courant de masse peuvent former des schémas reconnaissables. En particulier, des schémas de variation du courant de masse peuvent apparaitre périodiquement ou lors d'évènements spécifiques du fonctionnement du dispositif électronique. De tels schémas 10 sont représentés en figure 1, entourés par un cadre en trait pointillés. De tels schémas apparaissent par exemple lors d'étapes correspondant à une forte consommation électrique, par exemple une étape de cryptage, de lecture de mémoires ou d'émission de données.

Lors de certaines attaques contre le dispositif, l'attaquant cherche à reconnaitre de tels schémas 10. Une fois le schéma à reconnaitre déterminé, l'attaquant peut attendre l'apparition dudit schéma et, après un délai D, effectuer une attaque 12. L'attaque 12 est par exemple une attaque de type injection de faute ou de type attaque par canal auxiliaire. L'attaque est par exemple effectuée de manière systématique à chaque apparition du schéma 10.

Un tel procédé permet d'obtenir des informations sur le fonctionnement du dispositif, et en particulier sur la consommation du dispositif.

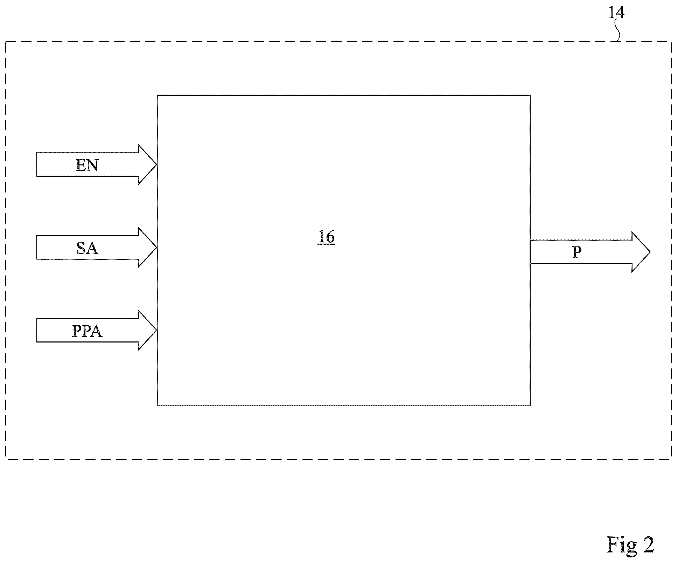

La figure 2 illustre schématiquement le fonctionnement d'un mode de réalisation d'une contremesure contre une attaque. Plus précisément, la figure 2 illustre une partie d'un dispositif 14. Le dispositif 14 comprend par exemple une contremesure selon un mode de réalisation. La contremesure est mise en œuvre au moins en partie par le bloc 16.

Le bloc 16 reçoit trois paramètres EN, SA, PPA. Les paramètres SA et PPA sont choisis par le fabricant ou l'utilisateur, de préférence par l'utilisateur. Les trois paramètres sont par exemple contenus dans une région mémoire du dispositif 14, par exemple dans un registre.

Le premier paramètre EN correspond à un paramètre d'activation. Ainsi, le paramètre EN prend une première valeur pour activer la contremesure et une deuxième valeur pour désactiver la contremesure. L'utilisateur peut ainsi, en modifiant la valeur du paramètre EN, choisir si la contremesure est activée ou désactivée. Le paramètre prend par exemple la valeur correspondant à l'activation de la contremesure périodiquement.

Le deuxième paramètre SA correspond à la surconsommation acceptable lors de la mise en œuvre de la contremesure. Plus précisément, le deuxième paramètre SA correspond à la valeur de puissance consommée par le dispositif 14 au-dessus de laquelle le dispositif doit considérer que trop de puissance est consommée. Ainsi, le deuxième paramètre SA correspond à la valeur de puissance au-dessus de laquelle le dispositif doit diminuer la consommation de puissance de la contremesure.

Le troisième paramètre PPA correspond à la perte de performance acceptable. Plus précisément, le troisième paramètre PPA correspond au temps supplémentaire nécessaire pour effectuer une action lorsque la contremesure est activée. Le paramètre PPA correspond par exemple à un pourcentage du temps nécessaire pour effectuer une action. Ainsi, si le paramètre PPA est, par exemple, égal à 30 %, une action ne peut pas prendre, lorsque la contremesure est activée, plus de 130 % du temps que prendrait l'action en l'absence de la contremesure. Par action, on entend une action effectuée par le dispositif 14, par exemple la lecture de la mémoire, le transfert d'une donnée, un calcul logique, l'encryptage ou le décryptage d'une donnée, etc.

Le bloc 16 est configuré pour mettre en œuvre des perturbations P aléatoires permettant la perturbation de l'attaque décrite en relation avec la figure 1. Plus précisément, le bloc 16 est configuré pour modifier le courant de masse Im de manière aléatoire et pour perturber la détection des schémas sur le courant Im selon les paramètres EN, SA et PPA. Ainsi, le bloc 16 est configuré pour modifier le courant de masse Im et perturber la détection des schémas sur le courant Im de telle manière que la puissance utilisée n'entraine pas la consommation de puissance du dispositif 14 à devenir supérieure à la surconsommation acceptable et que la perte de performance soit en dessous de la perte de performance acceptable.

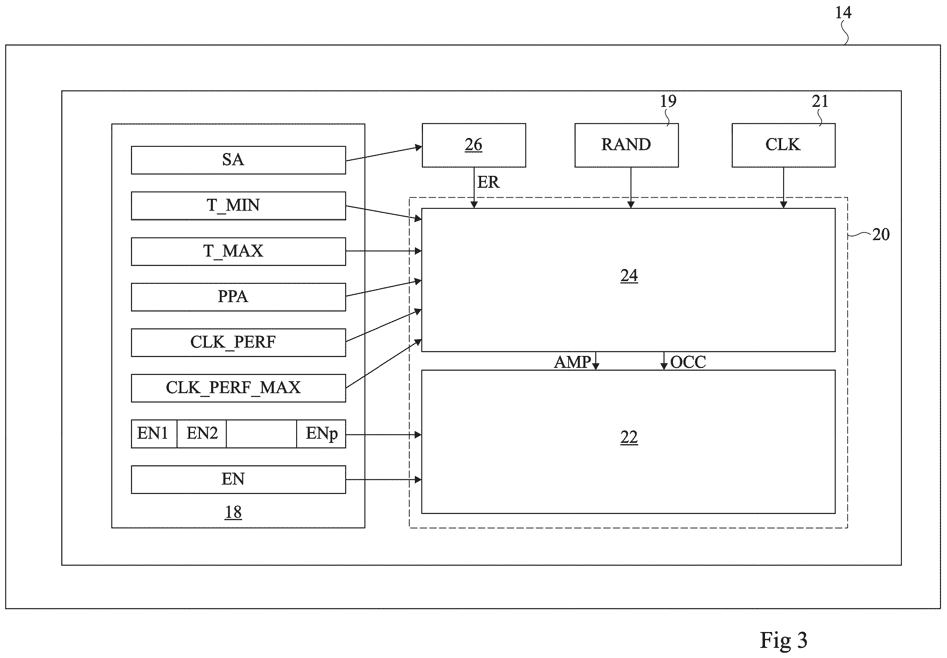

La figure 3 représente schématiquement un mode de réalisation d'un dispositif protégé contre des attaques. Plus précisément, la figure 3 représente plus en détail le dispositif 14 de la figure 2.

Le dispositif 14 comprend une mémoire ou un banc de registre 18. La mémoire 18 est de préférence au moins partiellement modifiable par l'utilisateur du dispositif. La mémoire 18 comprend les paramètres SA, PPA et EN. Les paramètres SA, PPA et EN peuvent être modifiés, de préférence par l'utilisateur du dispositif 14.

Le dispositif 14 comprend un générateur 19 de nombres aléatoires RAND. Le générateur 19 est de préférence configuré pour pouvoir fournir plusieurs nombres aléatoires simultanément.

Le dispositif 14 comprend une horloge 21. L'horloge 21 est configurée pour fournir un signal d'horloge CLK. Le signal d'horloge a de préférence une fréquence variable et une amplitude constante. De préférence, le signal d'horloge CLK a une fréquence égale à la valeur d'un paramètre CLK_PERF, de préférence un pourcentage, multipliée par une valeur de fréquence constante FCLK. Ainsi, la fréquence du signal d'horloge CLK est inférieure à la fréquence FCLK. La valeur du paramètre CLK_PERF est inférieure à un paramètre CLK_PERF_MAX. Le signal d'horloge CLK est utilisé par le circuit générant la contremesure. Le signal d'horloge est de préférence utilisé par une partie du dispositif 14 autre que les composants utilisés pour la génération de la contremesure. De préférence, les circuits du dispositif 14 effectuant les fonctions de la puce sont synchronisés avec le signal d'horloge CLK.

Le dispositif 14 comprend un ensemble 20 configuré pour mettre en œuvre des perturbations sur le courant de masse. L'ensemble 20 comprend un bloc 22 configuré pour pouvoir implémenter une ou plusieurs perturbations du courant de masse et un bloc 24 configuré pour paramétrer lesdites perturbations. Ainsi, le bloc 22 comprend un ou plusieurs modules d'implémentation d'une perturbation. Plus précisément, lorsque la contremesure est activée, c'est-à-dire lorsque le paramètre EN a la première valeur, l'ensemble 20 génère des phases de perturbation successives. Durant chaque phase, au moins une perturbation est mise en œuvre par le bloc 22. De préférence, durant chaque phase, au moins un paramètre de chaque perturbation est aléatoire.

Les perturbations pouvant être mises en œuvre par le bloc 22 sont par exemple divisées en deux catégories.

Une première catégorie de perturbations correspond à des perturbations dans lesquelles du bruit est ajouté entre deux portions d'un signal. Ainsi, un même signal prend plus de temps à être transmis. Une telle perturbation entraine une baisse des performances du dispositif, mais une augmentation faible de la consommation.

Une deuxième catégorie de perturbations correspond à des perturbations dans lesquelles du bruit est ajouté sur une portion du signal. Le bruit est ainsi généré en même temps que le signal. La durée du signal n'est pas impactée par le bruit. Une telle perturbation n'entraine pas une baisse des performances du dispositif, mais entraine une augmentation de la consommation.

Par exemple, la première catégorie de perturbations comprend l'insertion de fausses instructions dans les circuits, par exemple dans les circuits logiques, la mise en œuvre de faux accès mémoire, la modification de la fréquence du signal d'horloge. Par exemple, la deuxième catégorie de perturbations comprend l'ajout de bruit sur les régulateurs de tension et l'injection d'un courant aléatoire sur le courant de masse. Un autre type de perturbations correspond à la génération de bruit électromagnétique, qui peut être de la première ou de la deuxième catégorie.

Selon un mode de réalisation, la durée des phases est constante et fixée, par exemple par le fabriquant ou par l'utilisateur. Selon un mode de réalisation préféré, la durée des phases est aléatoire. Ainsi, au début de chaque phase, la durée de la phase à venir est déterminée à partir d'un nombre aléatoire T1 généré par le générateur 19. De préférence, la valeur de la durée de la phase est alors égale à T1 fois un pas de durée, par exemple égale à T1 fois la période du signal d'horloge CLK, par exemple égale à T1 fois la période correspondant à la fréquence FCLK. De préférence, la valeur aléatoire T1 est choisie dans une gamme déterminée par des paramètres T_MIN et T_MAX.

Les paramètres T_MIN et T_MAX sont de préférence contrôlée par le registre 18. Les paramètres T_MIN et T_MAX sont par exemple fixés par le fabricant et ne peuvent pas être modifiés après avoir été fixés. Alternativement, les paramètres T_MIN et T_MAX peuvent être modifiables par l'utilisateur.

Une fois la durée de la phase déterminée, l'ensemble 20 détermine les perturbations à implémenter parmi les perturbations possibles pouvant être implémentées par le bloc 22. Selon un mode de réalisation, toutes les perturbations pouvant être implémentées sont mise en œuvre durant chaque phase. Selon un autre mode de réalisation, un nombre constant de perturbation est mis en œuvre, les perturbations mises en œuvre étant choisie aléatoirement, par exemple grâce à un nombre aléatoire généré par le générateur 19. Selon un autre mode de réalisation, le nombre de perturbations mises en œuvre ainsi que le choix des perturbations sont aléatoires, par exemple basés sur un ou plusieurs nombres aléatoires générés par le générateur 19.

Par exemple, le registre 18 comprend des paramètres d'activation EN1, EN2, ..., Enp. Chaque paramètre d'activation correspond à une perturbation. La valeur p correspond ainsi au nombre de perturbations possibles, chaque perturbation pouvant être activée ou désactivée selon la valeur du paramètre d'activation correspondant. Ainsi, lorsque les perturbations à mettre en œuvre sont choisies, les paramètres d'activation prennent les valeurs correspondant à l'état d'activation ou de désactivation de la perturbation.

Les configurations des perturbations, par exemple l'amplitude AMP de chaque perturbation et le taux d'apparition OCC de chaque apparition, sont par exemple choisies en fonction des paramètres SA et PPA. Par taux d'apparition, on entend le pourcentage du temps nécessaire pour effectuer une action durant lequel la perturbation est implémentée. Pour une perturbation de la première catégorie, le taux d'apparition correspond au pourcentage du temps nécessaire pour effectuer une action ajouté par la présence des perturbations. Ainsi, si le taux d'apparition de la perturbation de la première catégorie est de 4%, une action, qui est effectuée en 100% d'un temps T en l'absence de la perturbation, sera alors effectuée en 104% du temps T.

Le dispositif 14 comprend un circuit 26 configuré pour comparer la consommation de puissance de l'ensemble 20 avec le paramètre SA de surconsommation. Ainsi, lorsque la consommation de l'ensemble 22 dépasse le paramètre SA, un signal d'erreur ER est fourni à l'ensemble 20. Les perturbations mises en œuvre lors de la phase suivante sont alors adaptées pour diminuer la consommation ou pour diminuer le risque de surconsommation.

De préférence, durant chaque phase, les perturbations sont synchronisées sur le signal d'horloge CLK dont la fréquence est de préférence aléatoire. Au début de chaque phase, le paramètre CLK_PERF est ainsi déterminé aléatoirement, par exemple à l'aide d'un nombre aléatoire généré par le générateur 19. Le paramètre CLK_PERF correspond par exemple à un pourcentage. La fréquence du signal d'horloge CLK correspond ainsi par exemple à ce pourcentage multiplier par la fréquence constante FCLK. Par exemple, la valeur du paramètre CLK_PERF est choisie en dessous de la valeur CLK_PERF_MAX correspondant à la valeur maximale que peut prendre le paramètre CLK_PERF. Les valeurs CLK_PERF et CLK_PERF_MAX sont de préférence contenues dans le registre 18. La valeur du paramètre CLK_PERF_MAX peut par exemple être modifiée par l'ensemble 20, par exemple en réponse à une détection d'une surconsommation par le circuit 26.

Le fonctionnement de l'ensemble 20 sera décrit plus en détail par la suite.

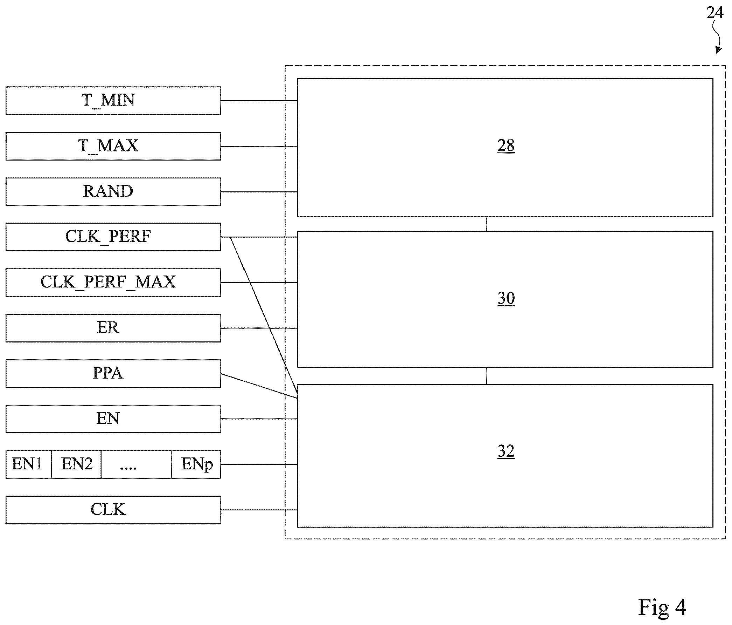

La figure 4 représente plus en détail une partie du mode de réalisation de la figure 3. Plus précisément, la figure 4 représente plus en détail le bloc 24.

Le bloc 24 comprend un bloc 28 de génération des phases. Le bloc 28 est configuré pour recevoir les paramètres T_MIN et T_MAX, ainsi que des nombres aléatoires RAND générés par le générateur 19 de la figure 3. Le bloc 28 reçoit en outre de préférence le paramètre d'activation EN et le signal d'horloge CLK.

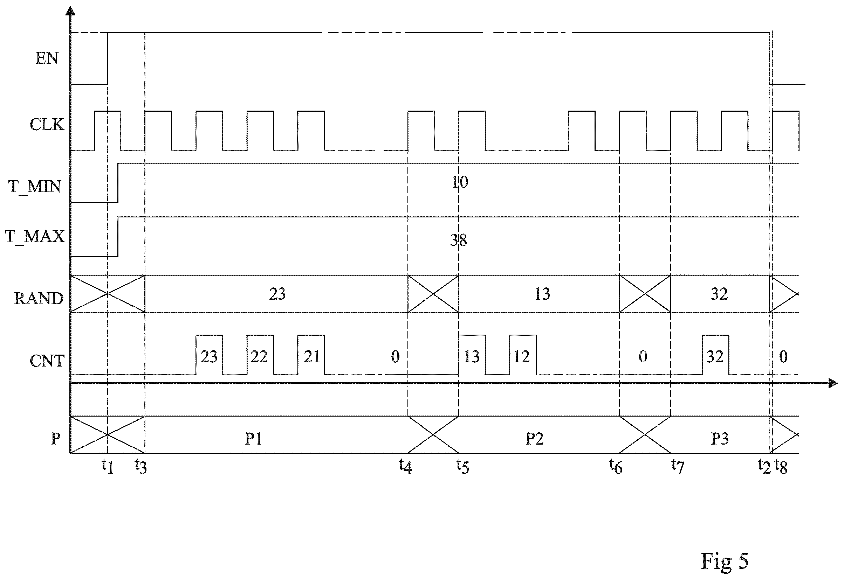

Le fonctionnement du bloc 28 sera décrit plus en détail en relation avec la figure 5.

Le bloc 24 comprend un bloc 30 de gestion de la surconsommation. Le bloc 30 est configuré pour recevoir les paramètres CLK_PERF et CLK_PERF_MAX ainsi que le signal d'erreur ER indiquant la détection d'une surconsommation. Le bloc 30 reçoit en outre de préférence le paramètre d'activation EN et le signal d'horloge CLK.

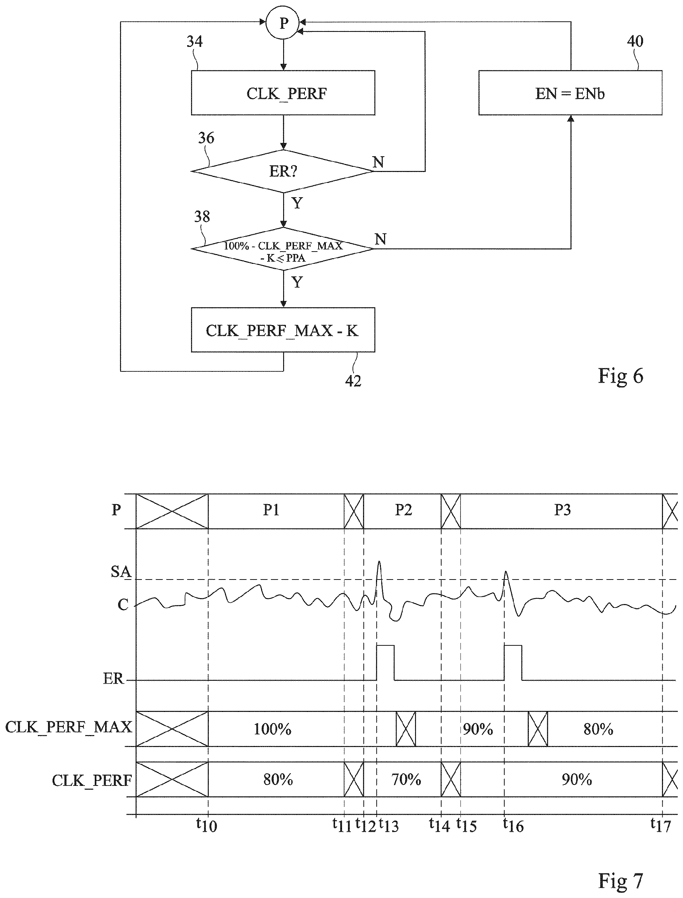

Le fonctionnement du bloc 30 sera décrit plus en détail en relation avec les figures 6 et 7.

Le bloc 24 comprend un bloc 32 de gestion de la perte de performance. Le bloc 32 est configuré pour recevoir les paramètres CLK_PERF et PPA ainsi que les signaux d'activation EN1, EN2, ..., Enp des perturbations. Le bloc 32 reçoit en outre de préférence le paramètre d'activation EN et le signal d'horloge CLK.

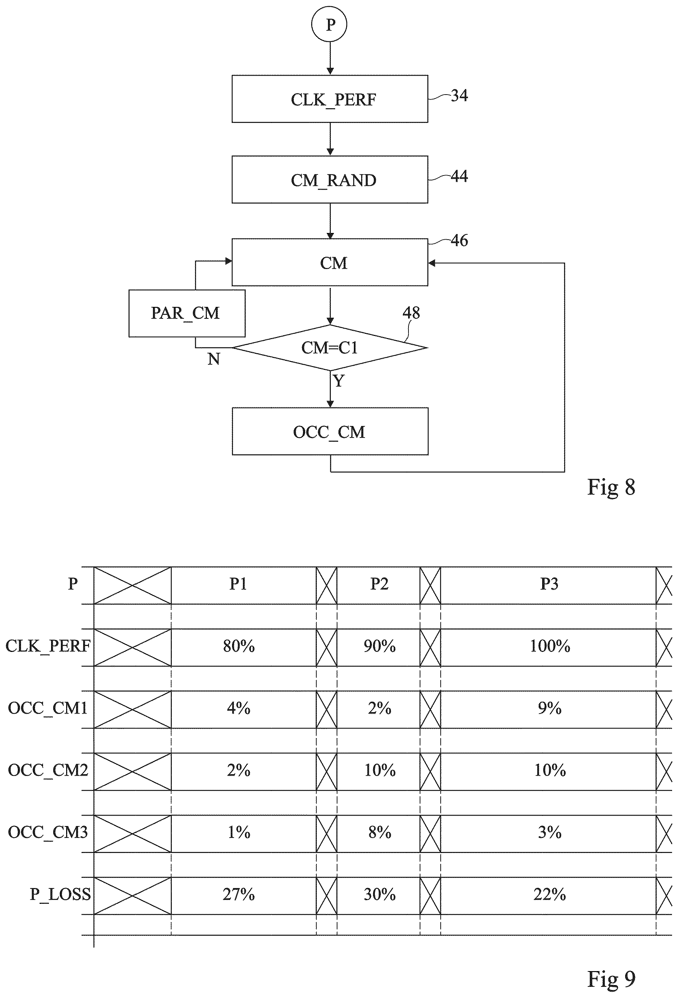

Le fonctionnement du bloc 32 sera décrit plus en détail en relation avec les figures 8 et 9.

La figure 5 est un chronogramme illustrant le fonctionnement d'une partie du mode de réalisation de la figure 4. Plus précisément, la figure 5 est un chronogramme illustrant le fonctionnement du bloc 28 de génération des phases. Plus précisément, la figure 5 illustre l'exemple dans lequel la durée des phases est aléatoire.

La figure 5 illustre l'activation, le fonctionnement et la désactivation de la contremesure. Ainsi, à un instant t1, le paramètre EN prend une valeur haute indiquant l'activation de la contremesure. A un instant t1, le paramètre EN prend une valeur basse indiquant la désactivation de la contremesure. La contremesure est ainsi active entre les instants t1 et t2.

Entre l'activation de la contremesure et le premier front montant du signal d'horloge CLK, intervenant à un instant t3, le bloc 28 reçoit les valeurs des paramètres T_MIN et T_MAX. Dans l'exemple de la figure 5, les paramètres T_MIN et T_MAX ont respectivement des valeurs égales à 10 et 38.

A l'instant t3, le bloc 28 reçoit une valeur aléatoire RAND, de préférence générée par le générateur 19. La valeur RAND est comprise entre les paramètres T_MIN et T_MAX. Dans l'exemple de la figure 5, la valeur RAND générée à l'instant t3 est égal à 23.

Une phase P1 commence ainsi à l'instant t3. La durée de la phase P1 est égale à la multiplication de la valeur RAND avec un pas de durée. De préférence, le pas de durée est égal à la période du signal d'horloge. Ainsi, la phase P1 a une durée égale à 23 cycles du signal d'horloge.

Le bloc 28 comprend de préférence un compteur CNT permettant de déterminer la fin de la phase P1. Ainsi, lorsque le compteur compte 23 cycles du signal d'horloge, la phase P1 est terminée. La phase P1 se termine ainsi à un instant t4.

A un instant t5, suivant l'instant t4 et correspondant au premier front montant après **l'instant** t4, une phase P2 commence et un nouveau nombre aléatoire RAND est généré entre les paramètres T_MIN et T_MAX. Dans l'exemple de la figure 5, la valeur RAND de la phase P2 est 13. Après une durée égale à 13 fois la période du signal d'horloge, la phase P2 est terminée. La phase P2 se termine ainsi à un instant t6.

Similairement, à un instant t7, suivant l'instant t6 et correspondant au premier front montant après l'instant t6, une phase P3 commence et un nouveau nombre aléatoire RAND est généré entre les paramètres T_MIN et T_MAX. Dans l'exemple de la figure 5, la valeur RAND de la phase P3 est 32. Après une durée égale à 32 fois la période du signal d'horloge, la phase P3 est terminée. La phase P3 se termine ainsi à un instant t8.

L'instant t8 est située après l'instant t2. Au front montant suivant l'instant t8, le paramètre EN a la valeur basse indiquant la désactivation de la contremesure. Ainsi, le bloc ne génère pas de phase après la phase P3.

De manière plus générale, lorsque le paramètre EN a la valeur d'activation de la contremesure, le bloc 28 génère des phases de durées aléatoires en générant un nombre aléatoire au début de chaque phase et en utilisant un compteur pour déterminer la fin de la phase.

Selon un mode de réalisation, le signal d'horloge CLK correspond au signal d'horloge ayant une fréquence modifiée par le paramètre CLK_PERF. Selon un autre mode de réalisation, le signal d'horloge utilisé pour déterminer la durée des phases correspond au signal d'horloge ayant la fréquence fixe FCLK.

La figure 6 représente le fonctionnement d'une partie du mode de réalisation de la figure 5. Plus précisément, la figure 6 illustre le fonctionnement du bloc 30 de gestion de la surconsommation. La figure 6 représente un algorithme illustrant le fonctionnement du bloc 30.

Pour chaque phase P, le bloc 30 détermine (bloc 34) le paramètre CLK_PERF. Le paramètre CLK_PERF est choisi de manière aléatoire entre la valeur du paramètre CLK_PERF_MAX et une valeur égale à la soustraction du paramètre PPA, en pourcentage, de 100 %. Ainsi, Le paramètre CLK_PERF est choisi de manière aléatoire entre la valeur du paramètre CLK_PERF_MAX et une valeur égale à 100% - PPA. Le paramètre CLK_PERF correspond au multiplicateur appliqué à la fréquence du signal d'horloge. Ainsi, si la valeur du paramètre CLK_PERF est égale à 80 %, la fréquence du signal d'horloge utilisé par l'ensemble 20 et par exemple au moins une partie du dispositif 14 est égale à 80 % du signal d'horloge CLK.

Durant la phase P, le bloc 30 attend (bloc 36 "ER?") l'arrivé d'un signal d'erreur généré par le circuit 26 du dispositif. Autrement dit, le bloc 30 attend l'apparition d'une surconsommation, mesurée par le circuit 26 et indiquée par le signal d'erreur ER.

Si aucune surconsommation n'est détectée (sortie N du bloc 36) avant la fin de la phase P, le bloc 30 ne fait rien de plus et la phase suivante commence.

Lorsqu'une surconsommation est détectée, (sortie Y du bloc 36), le bloc 30 détermine (bloc 38 "100%-CLK_PERF_MAX-K≤PPA") s'il est possible de diminuer le paramètre CLK_PERF_MAX d'une valeur de préférence constante K tout en respectant le paramètre de perte de performance acceptable. Autrement dit, le bloc 30 détermine si la soustraction du paramètre CLK_PERF_MAX et de la valeur K à cent pourcent est inférieur ou égale au paramètre PPA, autrement dit, si la valeur de 100%-CLK_PERF_MAX-K est inférieure ou égale au paramètre PPA. La valeur K est de préférence un pourcentage. La valeur K est par exemple égale à 10%. La valeur K est par exemple déterminée par le fabricant ou par l'utilisateur. La valeur K est par exemple un paramètre modifiable contenu dans le registre 18.

S'il n'est pas possible de diminuer le paramètre CLK_PERF_MAX (sortie N du bloc 38), la contremesure est par exemple arrêtée. Autrement dit, le paramètre d'activation EN prend la valeur correspondant à la désactivation de la contremesure (bloc 40 "EN=ENb"). La contremesure peut ensuite être réactivée par exemple après que des paramètres aient été ajustés.

S'il est possible de diminuer le paramètre CLK_PERF_MAX (sortie Y du bloc 38), la valeur du paramètre CLK_PERF_MAX est diminué de la valeur K (bloc 42 "CLK_PERF_MAX-K"). Le bloc attend ensuite la phase P suivante.

La diminution de la fréquence du signal d'horloge entraine une diminution de la performance, c'est-à-dire une augmentation du temps nécessaire pour effectuer une même action, mais entraine également une diminution de la consommation. Ainsi, la diminution du paramètre CLK_PERF_MAX entraine la diminution de la fréquence maximale possible de la fréquence du signal d'horloge et la diminution des risques de surconsommation.

La figure 7 est un chronogramme illustrant le fonctionnement d'une partie du mode de réalisation de la figure 5. Plus précisément, la figure 7 représente :

- les phases P ;
- la consommation C ;
- le signal d'erreur ER ;
- le paramètre CLK_PERF_MAX; et
- le paramètre CLK_PERF.

A un instant t10, une phase P1 commence. Le paramètre CLK_PERF_MAX est, dans l'exemple de la figure 7, égal à 100%. **A l'instant** t10, le paramètre CLK_PERF est choisi entre CLK_PERF_MAX et 100%-PPA. Par exemple, dans l'exemple de la figure 7, le paramètre PPA est par exemple égal à 40%. Ainsi, le paramètre CLK_PERF est choisi entre 60% et 100%. Dans l'exemple de la figure 7, la valeur du paramètre CLK_PERF est égal à 80% pendant la phase P1.

La phase P1 se termine à un instant t11. Le circuit 26 n'a pas détecté de surconsommation durant la phase P1, c'est-à-dire que la consommation C n'a pas dépassé la valeur du paramètre SA. Ainsi, le signal ER n'a pas pris la valeur, haute dans l'exemple de la figure 7, représentant la détection d'une surconsommation. La valeur du paramètre CLK_PERF_MAX n'est pas modifiée.

A un instant t12, une phase P2 commence. Le paramètre CLK_PERF_MAX est encore égal à 100%. A l'instant t12, le paramètre CLK_PERF est encore choisi entre CLK_PERF_MAXet 100%-PPA, c'est-à-dire encore entre 60% et 100%. Dans l'exemple de la figure 7, la valeur du paramètre CLK_PERF est égal à 70% pendant la phase P2.

A un instant t13, la consommation C dépasse la valeur du paramètre SA. Le signal ER prend ainsi la valeur haute indiquant ce dépassement. La valeur du paramètre CLK_PERF_MAX diminue ainsi de la valeur K, ici égale à 10%. Le paramètre CLK_PERF_MAX est égal 90% après la gestion du signal ER. Le paramètre CLK_PERF_MAX devient égal 90% durant la phase P2. La valeur du paramètre CLK_PERF n'est pas modifiée au cours d'une phase. La phase P2 se termine à un instant t14.

A un instant t15, une phase P3 commence. Le paramètre CLK_PERF_MAX est maintenant égal à 90%. A l'instant t15, le paramètre CLK_PERF est choisi entre CLK_PERF_MAX et 100%-PPA, c'est-à-dire encore entre 60% et 90%. Dans l'exemple de la figure 7, la valeur du paramètre CLK_PERF est égal à 90% pendant la phase P3.

A un instant t16, la consommation C dépasse la valeur du paramètre SA. Le signal ER prend ainsi la valeur haute indiquant ce dépassement. La valeur du paramètre CLK_PERF_MAX diminue encore de la valeur K, ici égale à 10%. Le paramètre CLK_PERF_MAX est égal 80% après la gestion du signal ER. Le paramètre CLK_PERF_MAX devient égal 80% durant la phase P3. La valeur du paramètre CLK_PERF n'est pas modifiée au cours d'une phase. La phase P3 se termine à un instant t17.

De préférence, si une surconsommation est détectée au cours d'une phase P, la valeur du paramètre CLK_PERF_MAX est modifiée avant que la valeur du paramètre CLK_PERF de la phase suivante soit déterminée.

La figure 8 représente le fonctionnement d'une partie du mode de réalisation de la figure 5. Plus précisément, la figure 8 illustre le fonctionnement du bloc 32 de gestion de la perte de performance. La figure 8 représente un algorithme illustrant le fonctionnement du bloc 32.

Pour chaque phase P, le bloc 32 détermine (bloc 34) le paramètre CLK_PERF. Il s'agit de la même étape que celle décrite en relation avec la figure 6. Cette étape est effectuée une seule fois pour chaque phase et la valeur du paramètre CLK_PERF est utilisée pour les gestions des blocs 30 et 32. Autrement dit, le paramètre CLK_PERF utilisé dans les algorithmes des figures 6 et 8 est le même paramètre ayant la même valeur.

Pour chaque phase P, le bloc 32 détermine (bloc 44 "CM_RAND") ensuite une liste de perturbations qui seront mise en œuvre. Les perturbations sont choisies parmi les perturbations possibles du bloc 22 de la figure 3. Selon un mode de réalisation, le nombre de perturbations choisies est fixe. Selon un autre mode de réalisation, le nombre de perturbations choisies est variable, par exemple est aléatoire. Les perturbations sont par exemple choisies aléatoirement.

Pour chaque perturbation choisie (bloc 46 "CM"), le bloc 32 détermine (bloc 48 "CM=C1") si la perturbation est de la première catégorie définie en relation avec la figure 3. Autrement dit, le bloc 32 détermine si la mise en œuvre de la perturbation va entrainer une baisse de performance.

Si la perturbation n'est pas de la première catégorie (sortie N du bloc 48), le bloc 32 détermine les paramètres de la perturbation. Par exemple, le bloc 32 détermine le taux d'apparition de la perturbation et l'amplitude de la perturbation. Selon un mode de réalisation, les paramètres de ces perturbations sont constants d'une phase à une autre. Selon un autre mode de réalisation, les paramètres de ces perturbations sont aléatoires, par exemple obtenues selon des nombres aléatoires générés par le générateur 19.

Si la perturbation est de la première catégorie (sortie Y du bloc 48), c'est-à-dire si la mise en œuvre de cette perturbation entraine une diminution de la performance du dispositif, le bloc 32 détermine les paramètres de la perturbation de manière à ce que la perte de performance totale reste inférieure à la perte de performance maximale acceptée, c'est-à-dire inférieure au paramètre PPA.

Ainsi, pour chaque perturbation de la première catégorie, le bloc 32 calcule la perte de performance acceptable en fonction des pertes de performance dues à la valeur du paramètre CLK_PERF et des pertes de performances causées par les perturbations de la première catégorie déjà traitées. Une fois la perte de performance acceptable déterminée, le bloc 32 détermine les paramètres de la perturbation, en particulier le taux d'apparition de la perturbation, de préférence de manière aléatoire, de telle manière que la perte de performance de ladite perturbation soit inférieure à la perte de performance acceptable calculée. Le bloc 32 passe ensuite à la perturbation suivante, de telle manière que les paramètres de toutes les perturbations choisies à l'étape du bloc 44 soient déterminées.

Si le paramètre PPA est atteint avant que toutes les perturbations de première catégorie soient paramétrées, lesdites perturbations restantes ne sont de préférence pas mises en œuvre.

La figure 9 est un chronogramme illustrant le fonctionnement d'une partie du mode de réalisation de la figure 5. Dans l'exemple de figure 9, le bloc 32 a choisi trois perturbations CM1, CM2 et CM3 de la première catégorie. Le bloc 32 peut avoir choisi, en outre, des perturbations de la deuxième catégorie. Plus précisément, la figure 9 représente :

- les phases P ;
- le paramètre CLK_PERF ;
- le taux d'apparition OCC_CM1 de la perturbation CM1 ;
- le taux d'apparition OCC_CM2 de la perturbation CM2 ;
- le taux d'apparition OCC_CM3 de la perturbation CM3 ; et
- la perte de performance totale P_LOSS.

Durant la phase P1 de cet exemple, le paramètre CLK_PERF est égal à 80%. La diminution de la fréquence du signal d'horloge entraine donc une perte de performance égale à 20 %. Autrement dit, une même action du dispositif 14 synchronisé sur le signal d'horloge prend 20% plus de temps qu'en l'absence de la contremesure. Le paramètre PPA de perte de performance acceptable est égal, dans cet exemple, à 30%. Ainsi, il est encore possible de diminuer les performances de 10%.

Le bloc 32 détermine ainsi le taux d'apparition de la perturbation CM1. Ce taux d'apparition est choisi, de préférence aléatoirement, entre 0% et 10%. Dans la phase 1 de l'exemple de la figure 9, ce taux d'apparition est égal à 4%.

La perte de performance totale causée par la diminution de la fréquence du signal d'horloge et par la perturbation CM1 est 24%. Ainsi, il est encore possible de diminuer les performances de 6%. Le bloc 32 détermine ainsi le taux d'apparition de la perturbation CM2. Ce taux d'apparition est choisi, de préférence aléatoirement, entre 0% et 6%. Dans la phase 1 de l'exemple de la figure 9, ce taux d'apparition est égal à 2%.

La perte de performance totale causée par la diminution de la fréquence du signal d'horloge et des perturbations CM1 et CM2 est 26%. Ainsi, il est encore possible de diminuer les performances de 4%. Le bloc 32 détermine ainsi le taux d'apparition de la perturbation CM4. Ce taux d'apparition est choisi, de préférence aléatoirement, entre 0% et 4%. Dans la phase 1 de l'exemple de la figure 9, ce taux d'apparition est égal à 1%.

La perte totale P_LOSS de performance du dispositif est donc de 27% dans la phase P1.

Similairement, dans la phase P2, le paramètre CLK_PERF est égal à 90%. Ainsi, la perte de performance causée par la diminution de la fréquence du signal d'horloge est de 10 %. **Il** reste donc 20% pouvant être attribués aux perturbations CM1, CM2, CM3 sans dépasser le paramètre PPA. Le bloc 32 détermine successivement les valeurs des taux d'apparition OCC_CM1, OCC_CM2 et OCC_CM3. Les taux d'apparition OCC_CM1, OCC_CM2 et OCC_CM3 ont, dans l'exemple de la figure 9, les valeurs 2%, 10%, et 8%. La perte totale P_LOSS de performance du dispositif est donc de 30% dans la phase P2.

Dans la phase P3, le paramètre CLK_PERF est égal à 100%. Ainsi, la perte de performance causée par la diminution de la fréquence du signal d'horloge est de 0 %. **Il** reste donc 30% pouvant être attribués aux perturbations CM1, CM2, CM3 sans dépasser le paramètre PPA. Le bloc 32 détermine successivement les valeurs des taux d'apparition OCC_CM1, OCC_CM2 et OCC_CM3. Les taux d'apparition OCC_CM1, OCC_CM2 et OCC_CM3 ont, dans l'exemple de la figure 9, les valeurs 9%, 10%, et 3%. La perte totale P_LOSS de performance du dispositif est donc de 22% dans la phase P3.

De manière plus générale, le taux d'apparition OCC_CMn d'une perturbation CMn, pour n supérieur à 1, est choisi, de manière aléatoire, entre 0% et la soustraction de la somme des taux d'apparition des perturbations Cm, m étant inférieur à n, et de la différence entre paramètre CLK_PERF et 100 % à la valeur du paramètre PPA. Autrement dit, le taux d'apparition OCC_CMn d'une perturbation CMn est choisi de manière à suivre l'équation suivante :

$$0 \leq OCC_{CMn} \leq PPA - (100\% - CLK\_PERF) - \sum_{i=1}^{n-1} OCC\_CMi \quad .$$

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

**Revendications**

1. Dispositif électronique (14) comprenant un premier circuit de protection contre des attaques, le premier circuit comprenant une mémoire (18) configurée pour contenir un premier paramètre configurable (PPA) correspondant à la perte de performance acceptable, le premier circuit comprenant au moins deux modules distincts de perturbation (22) du courant de masse, le premier circuit étant configuré pour, lorsque la protection est activée :

   - générer des phases (P, P1, P2, P3) de fonctionnement ;
   - durant chaque phase, multiplier la fréquence d'un signal d'horloge (CLK) par un premier pourcentage (CLK_PERF) ; et
   - durant chaque phase, mettre en œuvre au moins une partie des modules de perturbation,

   le premier pourcentage (CLK_PERF) et les paramètres des modules de perturbation étant déterminés au début de la phase de telle manière que la perte de performance acceptable (PPA) n'est pas dépassée.

2. Procédé de commande d'un dispositif électronique (14) comprenant un premier circuit de protection contre des attaques, le premier circuit comprenant une mémoire (18) dans laquelle est contenu un premier paramètre configurable (PPA) correspondant à la perte de performance acceptable, le premier circuit comprenant au moins deux modules distincts de perturbation (22) du courant de masse, le procédé comprenant, lorsque la protection est activée :

- la génération par le premier circuit des phases (P, P1, P2, P3) de fonctionnement ;
- durant chaque phase, la multiplication par le premier circuit de la fréquence d'un signal d'horloge (CLK) par un premier pourcentage (CLK_PERF); et
- durant chaque phase, la mise en œuvre par le premier circuit d'au moins une partie des modules de perturbation, le premier pourcentage (CLK_PERF) et les paramètres des modules de perturbation étant déterminés au début de la phase de telle manière que la perte de performance acceptable (PPA) n'est pas dépassée.

3. Dispositif selon la revendication 1 ou procédé selon la revendication 2, dans lequel la perte de performance acceptable correspond au temps maximal supplémentaire nécessaire pour effectuer une action lorsque la protection est activée par rapport au temps nécessaire pour effectuer la même action lorsque la protection est désactivée.

4. Dispositif selon la revendication 1 ou 3 ou procédé selon la revendication 2 ou 3, dans lequel les attaques contre lesquelles le dispositif est protégé comprennent la mesure du courant de masse.

5. Dispositif selon l'une quelconque des revendications 1, 3, 4 ou procédé selon l'une quelconque des revendications 2 à 4, dans lequel le dispositif comprend un générateur de nombre aléatoire (19).

6. Dispositif selon l'une quelconque des revendications 1, 3 à 5 ou procédé selon l'une quelconque des revendications 2 à 5, dans lequel un deuxième paramètre (SA) configurable est contenu dans la mémoire (18), le deuxième paramètre (SA) correspondant à la surconsommation acceptable de puissance, le dispositif comprenant un deuxième circuit (26) de mesure de la consommation du dispositif et de comparaison avec le deuxième paramètre (26).

7. Dispositif selon l'une quelconque des revendications 1, 3 à 6 ou procédé selon l'une quelconque des revendications 2 à 6, dans lequel le premier circuit est configuré pour choisir aléatoirement le premier pourcentage (CLK_PERF) au début de chaque phase entre une valeur égale à 100% moins le premier paramètre et un deuxième pourcentage (CLK_PERF_MAX).

8. Dispositif ou procédé selon la revendication 7, dans lequel le premier circuit est configuré pour diminuer le deuxième pourcentage (CLK_PERF_MAX) si le deuxième circuit (26) détecte que la consommation du dispositif est supérieure au deuxième paramètre (PPA).

9. Dispositif ou procédé selon la revendication 8, dans lequel le premier circuit est configuré pour désactiver la protection si la valeur de 100% moins le deuxième pourcentage (CLK_PERF_MAX) devient supérieure au premier paramètre (PPA).

10. Dispositif selon l'une quelconque des revendications 1, 3 à 9 ou procédé selon l'une quelconque des revendications 2 à 9, dans lequel la durée des phases est aléatoire.

11. Dispositif selon l'une quelconque des revendications 1, 3 à 10 ou procédé selon l'une quelconque des revendications 2 à 10, dans lequel le premier circuit est configuré pour, à chaque phase, choisir aléatoirement les modules de perturbation mis en œuvre durant la phase.

12. Dispositif selon l'une quelconque des revendications 1, 3 à 11 ou procédé selon l'une quelconque des revendications 2 à 11, dans lequel les modules de perturbation sont divisées en des première et deuxième catégories, la première catégorie comprenant les perturbations dont la mise en oeuvre entraine une diminution de la performance du dispositif égale à son taux d'apparition et la deuxième catégorie dont la mise en oeuvre n'entraine pas ne diminution de la performance du dispositif.

13. Dispositif selon l'une quelconque des revendications 1, 3 à 12 ou procédé selon l'une quelconque des revendications 2 à 12, dans lequel le premier circuit est configuré pour déterminer aléatoirement, au début de chaque phase, pour chaque module de perturbation mis en œuvre durant la phase, un taux d'apparition.

14. Dispositif ou procédé selon les revendications 12 et 13, dans lequel le premier circuit est configuré pour déterminer, au début de chaque phase, aléatoirement et successivement pour chaque module de perturbation de la première catégorie mis en œuvre durant la phase, le taux d'apparition dudit module de perturbation entre 0% et la soustraction de la somme des taux d'apparition des modules de perturbation de la première catégorie déjà déterminé et de la différence entre le paramètre CLK_PERF et 100% à le premier paramètre (PPA).

EP 4 752 777 A1

Fig 1

12

EP 4 752 777 A1

Fig 2

Fig 3

| T_MIN |
| T_MAX |
| RAND |
| CLK_PERF |
| CLK_PERF_MAX |
| ER |
| PPA |
| EN |

| EN1 | EN2 | .... | ENp |

| CLK |

28

30

32

24

Fig 4

Fig 5

EP 4 752 777 A1

34 — CLK_PERF

36 — ER?  → N

38 — 100% - CLK_PERF_MAX - K ≤ PPA  → N

Y

42 — CLK_PERF_MAX - K

40 — EN = ENb

Fig 6

Fig 7

( P )

| CLK_PERF | ~34 |

| CM_RAND | ~44 |

| CM | ~46 |

| PAR_CM |

CM=C1 ~48

N

Y

| OCC_CM |

Fig 8

| P | | P1 | | P2 | | P3 | |
|---|---|---|---|---|---|---|---|
| CLK_PERF | | 80% | | 90% | | 100% | |
| OCC_CM1 | | 4% | | 2% | | 9% | |
| OCC_CM2 | | 2% | | 10% | | 10% | |
| OCC_CM3 | | 1% | | 8% | | 3% | |
| P_LOSS | | 27% | | 30% | | 22% | |

Fig 9

EP 4 752 777 A1

**RAPPORT DE RECHERCHE EUROPEENNE**

Numéro de la demande

EP 25 21 6807

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y<br>A | WO 2023/147025 A1 (VISA INT SERVICE ASS [US]) 3 août 2023 (2023-08-03)<br>* alinéa [0005] *<br>* alinéa [0029] - alinéa [0072] *<br>----- | 1-6,<br>10-12<br>7-9,13,<br>14 | INV.<br>G06F21/75<br>G06F21/77<br>H04L9/00 |
| Y | CN 112 395 649 A (NATIONZ TECHNOLOGIES INC) 23 février 2021 (2021-02-23)<br>* le document en entier *<br>----- | 1-6,<br>10-12 | |
| Y | US 2024/265100 A1 (PEDERSEN FRODE [NO]) 8 août 2024 (2024-08-08)<br>* alinéa [0011] - alinéa [0015] *<br>----- | 1-6,<br>10-12 | |
| A | SUGAWARA TAKESHI ET AL: "(Short Paper) Signal Injection Attack on Time-to-Digital Converter and Its Application to Physically Unclonable Function",<br>26 août 2020 (2020-08-26), 20200826, PAGE(S) 117 - 127, XP047559670,<br>* alinéa [03.2] *<br>----- | 1-14 | |

DOMAINES TECHNIQUES RECHERCHES (IPC)

G06F
H04L

Le présent rapport a été établi pour toutes les revendications

| Lieu de la recherche | Date d'achèvement de la recherche | Examinateur |
|---|---|---|
| Munich | 24 mars 2026 | Medvesan, Oana |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................

& : membre de la même famille, document correspondant

EPO FORM 1503 03.82 (P04C02)

**EP 4 752 777 A1**

## ANNEXE AU RAPPORT DE RECHERCHE EUROPEENNE
## RELATIF A LA DEMANDE DE BREVET EUROPEEN NO.

EP 25 21 6807

24-03-2026

| Document brevet cité au rapport de recherche | Date de publication | Membre(s) de la famille de brevet(s) | Date de publication |
|---|---|---|---|
| WO 2023147025 A1 | 03-08-2023 | US 2025103708 A1 | 27-03-2025 |
| | | WO 2023147025 A1 | 03-08-2023 |
| CN 112395649 A | 23-02-2021 | AUCUN | |
| US 2024265100 A1 | 08-08-2024 | US 2024265100 A1 | 08-08-2024 |
| | | WO 2022248493 A1 | 01-12-2022 |